# EUROPÄISCHE PATENTSCHRIFT

(11) **EP 0 731 552 B1**
(45) Veröffentlichungstag und Bekanntmachung des Hinweises auf die Patenterteilung: **05.01.2000**
(21) Anmeldenummer: 96102774.5
(22) Anmeldetag: 23.02.1996
(51) Int. Cl.: H02K 7/20, H02K 11/00

(54) **Elektrische Maschine**
Electrical machine
Machine électrique

(30) Priorität: 07.03.1995 DE 19508006
(43) Veröffentlichungstag der Anmeldung: 11.09.1996
(73) Patentinhaber: SIEMENS AKTIENGESELLSCHAFT, 80333 München (DE)
(72) Erfinder: Binder, Andreas, Dr., 97618 Hohenroth (DE); Seufert, Matthias, Dipl.-Ing. (FH), 97714 Oerlenbach (DE); Braun, Matthias, Dipl.-Ing. (FH), 97711 Thundorf (DE)

(56) Entgegenhaltungen:
- EP-A- 0 115 538
- GB-A- 2 013 417
- US-A- 4 237 394
- PATENT ABSTRACTS OF JAPAN vol. 017, no. 473 (E-1423), 27.August 1993 & JP-A-05 111213 (SANKYO SEIKI MFG CO LTD), 30.April 1993,

## Beschreibung

Die Erfindung betrifft eine elektrische Maschine.

Eine solche Maschine ist durch die DE-U-77 30 204 bekannt. Das an der Maschine angebaute Gebergerät ist in der Regel magnetischen Fremdfeldern, die von der Maschine ausgehen, ausgesetzt. Eine Quelle für solche Fremdfelder kann eine an der Maschine angebaute, elektrisch erregte Bremse sein. Führt das Gebergerät mechanische Schwingungen aus, die durch den Betrieb der elektrischen Maschine angeregt sein können, dann werden beim Vorhandensein von magnetischen Fremdfeldern, insbesondere dann, wenn dies Unipolarfelder sind, Störspannungen in den Wicklungnen des Gebergerätes induziert. Durch solche Störspannungen werden die eigentlichen Signalspannungen des Gebergerätes verfälscht, so daß es zu Fehlfunktionen bei dem von dem Gebergerät beeinflußten Regelungen kommen kann. Die JP 05-111213 beschreibt eine elektrische Maschine, die zur Reduzierung des Einflußes der induzierten Spannung einer Motorbremse auf einem Geber amagnetische Verbindungselemente aufweist.

Der Erfindung liegt die Aufgabe zugrunde, eine elektrische Maschine der eingangs beschriebenen Art so auszubilden, daß ein angebautes Gebergerät keine unzulässige Beeinflussung durch magnetische Fremdfelder erfährt.

Die Lösung der gestellten Aufgabe gelingt durch eine elektrische Maschine mit folgenden Merkmalen:

Mit einem an der einen Stirnseite des Maschinengehäuses angeordnetem Gebergerät, das Gebergerät weist einen rotiereden Geberteil auf, die Welle des Gebergerätes besteht aus amagnetische Material, der rotierende Geberteil ist mit seiner Welle an die Läuferwelle der Maschine mittels aus amagnetischem Material bestehenden Verbindungsmittel angekoppelt, zwischen der entsprechenden Frontseite des Gehäuses des Gebergerätes und dem diesen gegenüberliegenden stirnseitigen Bereich des Maschinengehäuses ist eine aus magnetisch leitfähigem Material bestehende Abschirmscheibe angeordnet.

Hierdurch ist ein hoher magnetischer Widerstand für magnetische Fremdfelder gegeben, so daß diese in ihrer Wirkung auf das Gebergerät serh stark geschwächt werden. Zur Schwächung dieser Wirkung trägt ferner bei, daß die Welle des Gebergerätes mittels aus amagnetischem Material bestehender Verbindungsmittel an die Läuferwelle angekoppelt ist.

Die Auswirkungen von frontal auf das Gebergerät einwirkenden Fremdfeldern auf die Signalspannung des Gebergerätes werden durch die Abschirmscheibe stark vermindert. Dazu trägt auch noch bei, daß die Abschirmscheibe magnetisch leitend mit dem Maschinengehäuse verbunden ist.

Eine weitere Abschirmmöglichkeit und damit eine weitere Verminderung des Fremdfeldeinflusses besteht darin, daß das Gehäuse des Gebergerätes aus magnetisch leitfähigem Material besteht.

Anhand einer inder Zeichnung im Teilschnitt als Ausführungsbeispiel dargestellten elektrischen Maschine wird die Erfindung nachfolgend näher beschrieben.

Mit 1 ist das eine Ständerwicklung 2 enthaltende Ständerblechpaket einer elektrischen Maschine bezeichnet. Die das Läuferblechpaket 3 tragende Läuferwelle der Maschine ist mittels Kugellager 5 in den Lagerschilden 6 der Maschine drehbar gelagert. Indem Teillängsschnitt ist nur die B-seitige Lagerung der Maschine dargestellt. Zwischen dem B-seitigen Lagerschild 6 und der betreffenden Läuferstirnseite ist eine mittels Gleichstrom elektrisch erregte Bremse 7 eingebaut. Außerhalb des Lagerschildes 5 ist als Gebergerät ein Resolver an die Maschine angebaut. Dieser Resolver 8 weist eine aus amagnetischem Material bestehende Welle 9 auf, die mittels einer durch eine Mittenbohrung der Resolverwelle 9 hindurchgeführte, ebenfalls aus amagnetischem Material bestehenden Verbindungsschraube 10 mit der Läuferwelle 4 verbunden ist. Auf der Resolverwelle 9 sind magnetisch induzierte, rotierende Wicklungsteile 11 angeordnet, denen entsprechende vom Gebergehäuse 12 getragene, feststehende Wicklungsteile 13 zugeordnet sind. Das Gehäuse 12 des Resolvers 8 besteht vorzugsweise aus magnetisch leitfähigem Material.

Zwischen der der Maschine zugewandten Frontseite des Resolvergehäuses 12 und dem ihr gegenüberliegenden stirnseitigen Bereich des Lagerschildes 6 ist eine aus magnetisch leitfähigem Material bestehende Abschirmscheibe 14 angeordnet. Diese Abschirmscheibe 14 ist mittels aus magnetisch leitfähigem Material bestehender Schrauben 15 am Lagerschild 6 befestigt.

Bei einer derart ausgebildeten elektrischen Maschine werden die beispielsweise von der gleichstromerregten Bremse 7 ausgehenden Fremdfeldeinflüsse auf die von dem Resolver 8 erzeugten Signalspannungen auf ein Minimum reduziert. Den über die Läuferwelle 4 verlaufenden magnetischen Feldlinien des Fremdfeldes wird durch die amagnetische Resolverwelle 9 ein hoher magnetischer Widerstand entgegengesetzt. Die aus der Stirnseite des Lagerschildes 6 austretenden Feldlinien werden durch die Abschirmscheibe 14 weitgehend kurzgeschlossen. Darüber hinaus noch zum Resolver 8 gelangende magnetische Feldlinien werden durch das magnetisch leitende Gehäuse 12 des Resolvers kurzgeschlossen und somit von den Wicklungsteilen 11 und 13 des Resolvers 8 ferngehalten. Damit ist eine Induzierung von Störspannungen in den Wicklungsteilen 11 und 12 des Resolvers 8 praktisch vollständig unterdrückt.

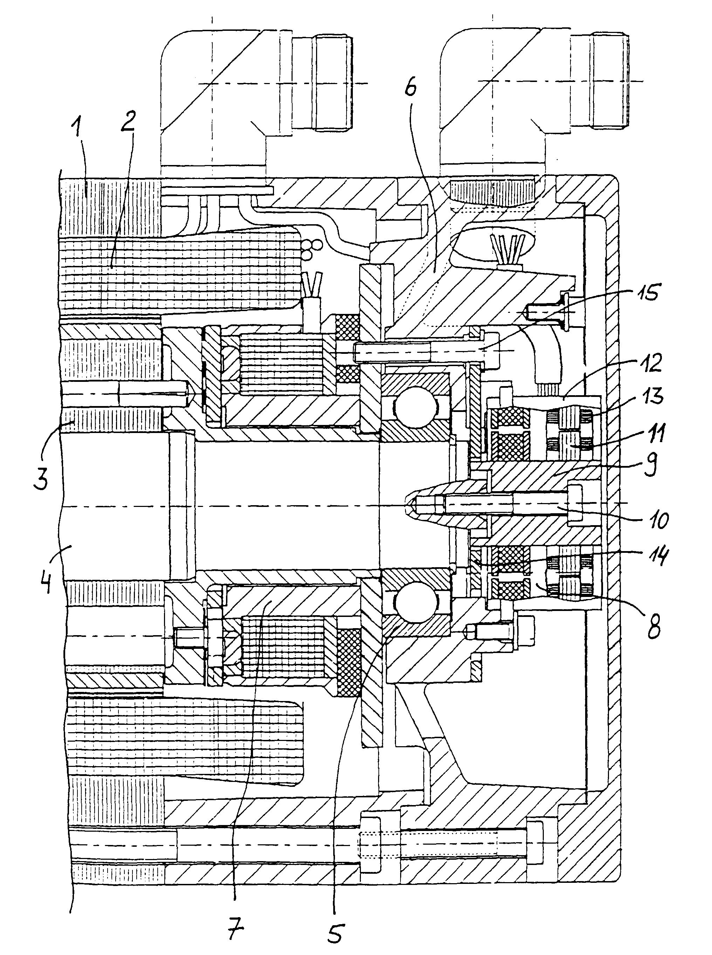

## Patentansprüche

1. Elektrische Maschine mit folgenden Merkmalen:
a) mit einem an der einen Stirnseite des Maschinengehäuses angeordnetem Gebergerät (8),
b) das Gebergerät (8) weist einen rotierenden Geberteil (11) auf, gekkenzeichnet durch daß,
c) die Welle (9) des Gebergerätes (8) aus amagnetischem Material besteht,
d) der rotierende Geberteil (11) mit seiner Welle (9) an die Läuferwelle (4) der Maschine mittels aus amagnetischem Material bestehenden Verbindungsmitteln angekoppelt ist,
e) zwischen der entsprechenden Frontseite des Gehäuses des Gebergerätes (8) und dem diesen gegenüberliegenden stirnseitigen Bereich des Maschinengehäuses (6) eine aus magnetisch leitfähigem Material bestehende Abschirmscheibe (14) angeordnet ist.

2. Elektrische Maschine nach Anspruch 1,
**dadurch gekennzeichnet,**
daß die Abschirmscheibe (14) magnetisch leitend mit dem Maschinengehäuse verbunden ist.

3. Elektrische Maschine nach Anspruch 1 oder 2,
**dadurch gekennzeichnet,**
daß das Gehäuse (12) des Gebergerätes (8) aus magnetisch leitfähigem Material besteht.

## Claims

1. Electric machine having the following features:
a) having a transmitting device (8) arranged on the one end face of the machine housing,
b) the transmitting device (8) has a rotating transmitter portion (11), characterised in that
c) the shaft (9) of the transmitting device (8) consists of anti-magnetic material,
d) the shaft (9) of the rotating transmitter portion (11) is coupled to the rotor shaft (4) of the machine by means of connecting means consisting of anti-magnetic material,
e) arranged between the corresponding face of the housing of the transmitting device (8) and the opposing end-face region of the machine housing (6) is a screening disc (14) consisting of magnetically conductive material.

2. Electric machine according to claim 1, characterised in that the screening disc (14) is connected to the machine housing in a magnetically conductive manner.

3. Electric machine according to claim 1 or 2, characterised in that the housing (12) of the transmitting device (8) consists of magnetically conductive material.

## Revendications

1. Machine électrique présentant les caractéristiques suivantes :
a) avec un appareil transmetteur (8) disposé sur un des côtés frontaux du carter de machine,
b) l'appareil transmetteur (8) présente une partie rotative (11), caractérisée par le fait que
c) l'arbre (9) de l'appareil transmetteur (8) est en un matériau amagnétique,
d) la partie rotative (11) du transmetteur est couplée avec son arbre (9) à l'arbre (4) de rotor de la machine par des moyens de liaison en un matériau amagnétique,
e) une plaque d'antiparasitage (14) en un matériau magnétiquement conducteur est disposée entre le côté frontal correspondant du boîtier de l'appareil transmetteur (8) et la zone frontale située en vis-à-vis du carter de machine (6).

2. Machine électrique suivant la revendication 1,
caractérisée par le fait que la plaque d'antiparasitage (14) est reliée de manière magnétiquement conductrice au carter de machine.

3. Machine électrique suivant la revendication 1 ou 2,
caractérisée par le fait que le boîtier (12) de l'appareil transmetteur (8) est en un matériau magnétiquement conducteur.
